# EUROPEAN PATENT SPECIFICATION

(11) **EP 2 475 110 B1**
(45) Date of publication and mention of the grant of the patent: **28.09.2016**
(21) Application number: 09848895.0
(22) Date of filing: 23.12.2009
(51) Int. Cl.: H04B 7/26, H04B 1/18

(54) **DIFFERENTIAL RECEPTION SYSTEM IN A CELLULAR RECEIVER AND METHOD FOR REALIZING SIGNAL RECEPTION THEREOF**
DIFFERENZIELLES EMPFANGSSYSTEM BEI EINEM MOBILFUNKEMPFÄNGER UND VERFAHREN FÜR DEN SIGNALEMPFANG DAFÜR
SYSTÈME DE RÉCEPTION DIFFÉRENTIELLE DANS UN RÉCEPTEUR CELLULAIRE ET PROCÉDÉ DE RÉALISATION DE LA RÉCEPTION DU SIGNAL

(30) Priority: 02.09.2009 CN 200910090680
(43) Date of publication of application: 11.07.2012
(73) Proprietor: ZTE Corporation, Shenzhen, Guangdong 518057 (CN)
(72) Inventor: HE, Wenqing, Shenzhen Guangdong 518057 (CN)
(74) Representative: Lavoix
(86) International application number: PCT/CN2009/075872
(87) International publication number: WO 2011/026290

(56) References cited:
- EP-A1- 0 644 605
- WO-A1-03/065603
- CN-A- 1 625 844
- CN-A- 1 943 107
- CN-A- 101 188 586
- US-A1- 2007 190 959
- US-A1- 2008 094 099

## Description

### TECHNICAL FIELD

The present disclosure relates to the field of a differential reception technology, especially to a differential reception system in a cellular receiver and a method for realizing signal reception thereof.

### BACKGROUND

A cellular receiver in the form of a differential reception system is very common. A differential reception system usually includes an antenna, a filter, a balun, a differential line and a back-end reception device. Wherein the antenna is configured to receive a Radio Frequency (RF) signal in the space; the filter is configured to filter disturbance outside communication channel; and the balun is configured to divide the signal received by the antenna into two channels, wherein the absolute value of the phase difference between one channel signal and another channel signal is about 180 degree, that is, the phases of the two channel signals are reversed. The delay difference between differential signals can be uniquely determined by the phase difference between the differential signals, and vice versa. Therefore, it is generally considered that the problems reflected by the delay difference value between the differential signals and the phase difference between the differential signals are same. Usually, the filter and the balun are integrated in one component. Differential lines are usually configured to transmitting two channel signals outputted by the balun, the phases of signals transmitted on the two signal passages is reversed, therefore, the two signal passages are customarily called as differential lines. The rear-end reception device usually adopts a modular design, integrating differential signal synthesizer, low noise amplifier (LNA), signal decoder, signal acquisition and signal post processing module and the like. Differential reception system has an advantage of restraining common mode interference, so it is widely applied in cellular receivers.

In a differential reception system, the optimized absolute value of the phase difference between signals transmitted in the differential lines is 180 degree, at that moment, the amplitude of the signal synthesized by two channel signals in a synthesizer is largest without fading of signal amplitude caused by phase/delay problem. However, in fact, the absolute value of the phase difference between the two channel differential signals outputted by a balun is not just 180 degree; as the absolute value of the phase difference between the differential signals fluctuates up and down around 180 degreed, the fading of the amplitude of the signal synthesized by the differential signal synthesizer can also fluctuate accordingly. More importantly, when the statuses of the two differential lines are inconsistent, such as the length and the number of corners, the times taken for passing through the two differential lines for a signal will also be inconsistent. Therefore, this may also cause the fluctuation of the phase difference between the differential signals, and thus cause the fading of the amplitude of the signal synthesized by the differential signal synthesizer. Along with the shapes of the mobile phones being smaller and smaller, the area configured to the layout of the differential lines is also decreasing smaller. Therefore, this may cause the greater difference between the statuses of the two differential lines, cause the absolute value of the phase difference between the differential signals to deviate the optimal 180 degree, and thus cause the sensitivity of the differential reception system to decrease.

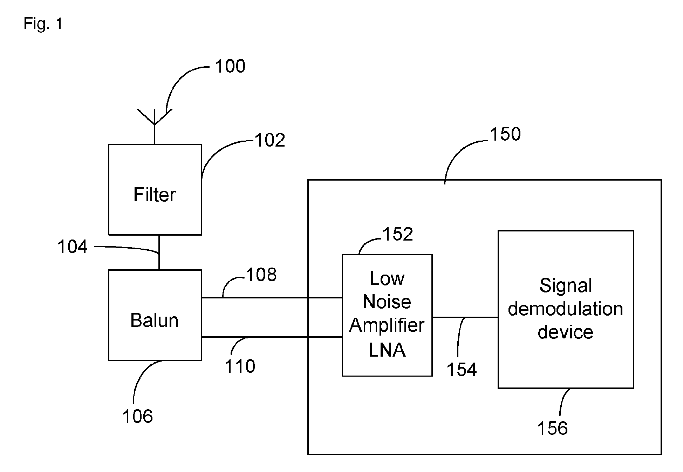

Fig. 1 illustrates a typical structure of a differential receiver in a cellular receiver in the relating technologies. As shown in Fig. 1, the differential receiver comprises an antenna 100, a filter 102, a transmission line 104, a balun 106, a differential line + 108, a differential line -110 and a signal amplification and demodulation module 150.

Wherein the antenna 100 is configured to receive radio waves transmitted in the space, for a mobile system, this means to receive radio frequency signals transmitted from a base station. The signal received by the antenna 100 includes much interference signals. There exists a larger problem if the signal is directly modulated. Therefore, the signal received by the antenna 100 will first be inputted to the filter 102 to perform the filtering, the current signal is a single-ended signal not a differential signal.

In order to restrain common mode interference, the single-ended signal filtered is converted to a differential signal to transmit. After passing through the filter 102, a signal is inputted into the balun 106 through the transmission line 104, and is converted to differential signals through the balun 106. Therefore, the signals outputted by the balun need two transmission lines to be transmitted, and two channel differential signals are transmitted separately through the differential line +108 and the differential line -110. Furthermore, in the relating technologies, the filter and the balun are generally integrated in one component.

The two channel differential signals are inputted into the signal amplification and demodulation module 150 to perform amplification and demodulation. The signal amplification and demodulation module 150 comprises a low noise amplifier 152 and a signal demodulating device 156. Firstly, the differential signals are inputted into the low noise amplifier 152 to be amplified so as to improve the Signal-to-Noise Ratio (SNR), at the same time, the differential signals are synthesized in the low noise amplifier 152 to transform into a single-ended signal, and then the single-ended signal is inputted into the signal demodulating device 156 to perform the modulation and related treatments through the transmission line 154. So, the reception of a signal is completed.

During the process of signal transmission of the above differential reception system, it cannot be assured that the absolute value of the phase difference between the two channel differential signals outputted is the optimal 180 degree during the process that the balun 106 transforms a signal from a single-ended signal into differential signals, therefore, the phase difference between the differential signals outputted by the bulan may have an error deviating the optimal value. In practical applications, this performance is generally described by phase balance. Meanwhile, when signals are transmitted on the differential line +108 and the differential line -110, since the electrical characteristics of the two differential lines cannot be made completely same, the delays caused by the differential line +108 and the differential line -110 for the signals also may not be completely same; while the transmission delay may directly cause the variation of the phase difference between the differential signals. It is because of the balun 104, the differential line +108 and the differential line -110 that the phase difference of the differential signals must have an error deviating the optimal value, while the deviation of the phase difference of the differential signals is one of the important reasons causing to decrease the sensitivity of a differential receiver most directly.

At present, there may be the phase difference of about 40 degree between the two passages of the differential lines generally in a layout, which causes the corresponding receiving sensitivity to decrease 1.1dB. However, starting from 40 degree above, the deterioration of the receiving sensitivity may more and more fasten along with the variation of phase. At 50 degree, the receiving sensitivity decreases 1.8dB. At 60 degree, the loss is 2.9dB. However, at 10 degree and 20 degree, the receiving sensitivity separately decreases only 0.015dB and 0.2dB.

Along with cellular mobile devices such as a phone becoming smaller and smaller and lower cost, the layout space is smaller and smaller. As the limit of the layout, it is very common that there are corners on the trace of differential lines. After calculating, one corner may lead to an additional phase difference of about 30 degree, and this additional phase difference, the phase difference (-10 degree to +10 degree) caused by a balun and the phase difference (-20 degree to +20 degree) caused by the unequal length of differential lines influence the receiving sensitivity together. Therefore, the uncertainty caused by layout each time is very high. In some commercial-scale mobile phones, it is very common that the receiving sensitivity of GSM1800 becomes about -106dBm. In comparison with the optimum sensitivity of -109.5dBm for a phone (considering loss of the filter), differential lines in such phones have the phase difference of between 60 degree to 70 degree).

To sum up, in the relating technologies, the absolute value of the phase difference between differential lines from differential line input to back-end reception device is determined entirely by a balun and differential lines without any space to debug, which not only may bring to a higher requirement for the layout of differential lines, but also can not assure the receiving sensitivity of a differential reception system.

EP0 644 605A (MOTOROLA INC [US]) 2 March 1995 (1995-03-22) discloses an amplitude and phase compensation circuit having a predetermined optimized electrical length and characteristic impedance that is inserted in series with a port on the balanced side of the balun.

US 2008/094099 A1 (GOH BAN HOK [SG]) ET AL) 24 April 2008 (2008-04-24) discloses a differential line compensation apparatus that has a first terminal to receive a first differential signal supplied by a first trace and a second terminal to receive a second differential signal supplied by a second trace. The apparatus has at least one detector to detect a first condition a first signal at least related to the first differential signal, and a second condition a second signal at least related to the second differential signal and to provide an output containing the results the detections.

WO 03/065603 A1 (KONINKL PHILIPS ELECTRONICS NV [NL]; DE GRAAUW A NTONIUS J M [NL]) 7 August 2003 (2003-08-07) discloses a method of processing signals in a transmitter and/or receiver module, a transmitter and/or receiver module, and an substrate with an antenna module to be used in the transmitter and/or receiver module.

### SUMMARY

The main objective of this disclosure is to provide a differential reception system in a cellular receiver and a method for realizing signal reception thereof, in order to improve the receiving sensitivity of a differential reception system and reduce the requirement for layout of differential lines. The invention is defined in the claims.

In order to realize such purpose, the present disclosure adopts the following technical solutions:
a differential reception system in a cellular receiver comprises a filter, a balun, and a signal amplification, phase discrimination and demodulation module; wherein
the filter is configured to filter the signal received by an antenna;
the balun is configured to transform the signal filtered into differential signals; and
the signal amplification, phase discrimination and demodulation module is configured to perform amplification and phase discrimination process of differential signals and compensate the phase of either channel differential signal, and synthesize the processed differential signals and demodulate the synthesized signal;
wherein the signal amplification, phase discrimination and demodulation module comprise a low noise amplifier, a phase discrimination unit, a digital phase control unit and a signal demodulation device, wherein
the low noise amplifier is configured to amplify the differential signals and output the amplified differential signals;
the phase discrimination unit is configured to discriminate and lock the phase of the amplified differential signals, and synthesize the processed differential signals;
the digital phase control unit is configured to adjust the phase locked by either channel phase discrimination unit; and
the signal demodulation device is configured to demodulate the synthesized signal;
wherein the phase discrimination unit may comprise a phase-locked loop circuit and a differential signal synthesis circuit, wherein,
a phase-locked loop circuit is set on each differential line for discriminating and locking the phase of the amplified differential signal passed through the differential line; either channel phase-locked loop circuit is controlled by the digital phase control unit to adjust the locked phase; and
the differential signal synthesis circuit is configured to synthesize the differential signals outputted from the two channel phase-locked loop circuits, and output the synthesized signal to the signal demodulation device.

The digital phase control unit may comprise a phase compensation control circuit and a phase compensation register, wherein
the phase compensation register is configured to store phase control information; and
the phase compensation control circuit is configured to adjust the phase locked by the either channel phase discrimination unit according to the phase control information acquired from the phase compensation register.

A method for receiving signals realized by a differential reception system in a cellular receiver comprises:
filtering, by a filter, a received signal and then transforming, by a balun, the filtered signal into differential signals;
performing, by a signal amplification, phase discrimination and demodulation module, an amplification and phase discrimination process of differential signals and compensating a phase of either channel differential signal, and synthesizing the processed differential signals and then demodulating the synthesized signal;
characterized in that the step of performing, by a signal amplification, phase discrimination and demodulation module, an amplification and phase discrimination process of differential signals and compensating a phase of either channel differential signal, and synthesizing the processed differential signals and then demodulating the synthesized signal comprises:
   amplifying, by a low noise amplifier, the differential signals and outputting the amplified differential signals;
   discriminating and locking, by a phase discrimination unit, the phase of the amplified differential signals;
   adjusting, by a digital phase control unit, either the locked phase of the differential signals;
   synthesizing, by the phase discrimination unit, the processed differential signals; and
   demodulating, by a signal demodulation device, the synthesized signal,
   wherein the step of discriminating and locking, by a phase discrimination unit, the phase of the amplified differential signals specifically comprises:
      discriminating and locking, by a phase-locked loop circuit in the phase discrimination unit set on each differential line, the phase of the amplified differential signal passed through said differential line; adjusting, by either channel phase-locked loop circuit, the locked phase in the control of the digital phase control unit, and
   wherein the step of synthesizing, by the phase discrimination unit, the processed differential signals specifically comprises:
      synthesizing, by a differential signal synthesis circuit in the phase discrimination unit, the processed differential signals and outputting the synthesized signal to the signal demodulation device.

The adjustment on the phase of the either channel differential signal may comprise adjusting, by a phase compensation control circuit, the phase locked by the either channel phase discrimination unit according to preset phase control information acquired from a phase compensation register.

It can be seen from the technical solution of the present disclosure aforementioned that, the disclosure comprises: filtering a received signal and then transforming the filtered signal into differential signals; and performing amplification and phase discrimination process of differential signals and compensating the phase of either channel differential signal, and synthesizing the processed differential signals and demodulating the synthesized signal. By means of controlling the phases of differential lines, the disclosure improves the receiving sensitivity of a differential reception system and significantly reduces the requirement for layout of the differential lines.

### BRIEF DESCRIPTION OF THE DRAWINGS

Fig. 1 illustrates a typical structure of a differential receiver in a cellular receiver in the relating technologies;
Fig. 2 illustrates a structure of a differential receiver in a cellular receiver in the disclosure;
Fig. 3 illustrates a flow of a method for receiving signals realized by a differential reception system in a cellular receiver in the disclosure; and
Fig. 4 illustrates a structure of a phase discrimination unit and a digital phase control unit in the disclosure.

### DETAILED DESCRIPTION

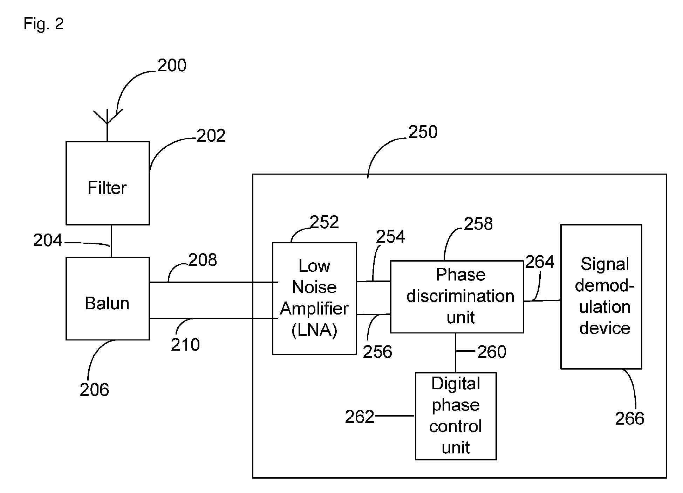

Fig. 2 illustrates a structure of a differential receiver in a cellular receiver in the disclosure. Fig. 2 comprises an antenna 200, a filter 202, a signal transmission line 204, a balun 206, a differential line +208, a differential line -210 and a signal amplification, phase discrimination and demodulation module 250. Wherein the signal amplification, phase discrimination and demodulation module 250 comprises a low noise amplifier 252, a differential line +254, a differential line -256, a phase discrimination unit 258, a digital phase control unit 262, a signal demodulation device 266, a signal transmission line 260 and a signal transmission line 264.

In Fig. 2, the component parts before the low noise amplifier 252 are completely consistent with the relating technologies. The signal by wireless transmission is first received by the antenna 200, and then is inputted into the filter 202 to filter. After filtering the noises outside the useful band, the signal is transmitted to the balun 206 through the transmission line 204 and transformed into differential signals, and the differential signals are transmitted to the signal amplification, phase discrimination and demodulation module 250 through the differential line +208 and the differential line -210.

The differential signals are inputted into the low noise amplifier 252 in the signal amplification, phase discrimination and demodulation module 250 to be amplified through the differential line +208 and the differential line -210. Different from the relating technologies, the signals outputted from the low noise amplifier 252 are still differential signals, are transmitted through the differential line +254 and the differential line -256 and inputted into the phase discrimination unit 258 to perform phase discrimination and lock. The phase discrimination unit 258 is configured to separately lock the phases of the differential signals, to ensure that the digital phase control unit 262 can control the phases of the differential signals. The phase of the signal locked by the phase discrimination unit 258 is adjusted by the control information of the digital phase control unit 262 through the transmission line 260, so as to adjust the phase difference between the differential signals. After being performed the phase compensation, the differential signals are synthesized into a single-ended signal in the phase discrimination unit 258. The synthesized single-ended signal is inputted into the signal demodulation device 266 to be performed demodulation and related processes through the transmission line 264, so as to complete the signal reception. The specific realization of the signal demodulation device 266 belongs to the relating technologies and will not be described here.

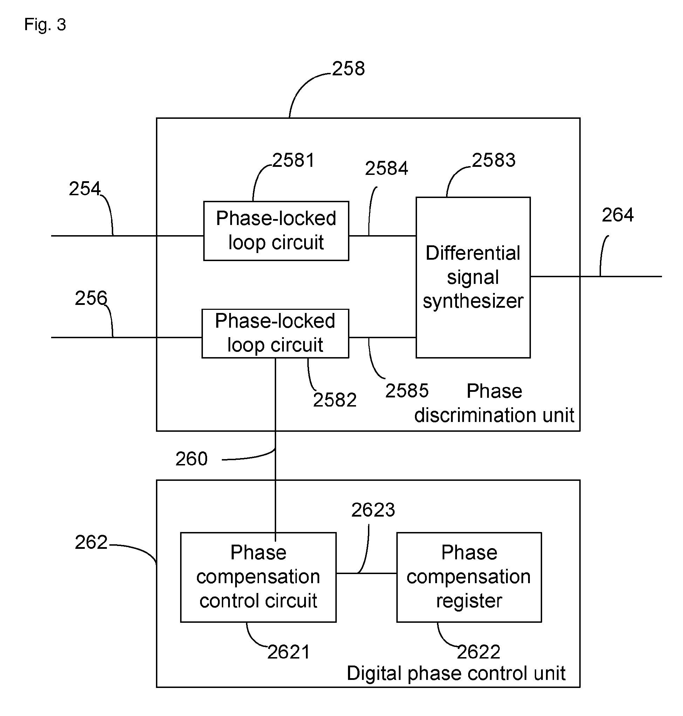

Fig. 3 illustrates a structure of one embodiment of a phase discrimination unit and digital phase control unit in the disclosure. As shown in Fig. 3, the phase discrimination unit 258 comprises a phase-locked loop circuit 2581, and a phase-locked loop circuit 2582 and a differential signal synthesis circuit 2583. The digital phase control unit 262 comprises a phase compensation control circuit 2621 and a phase compensation register 2622.

The phase discrimination unit 258 comprises a differential line +254 and a differential line -256 which inputs from a front-end device (i.e., the low noise amplifier 252 in Fig. 2) to the phase discrimination unit 258. The differential signals are separately inputted into the phase-locked loop 2581 and the phase-locked loop 2582 to be locked the phases. The digital phase control unit 262 controls the phases locked by the phase-locked loop 2581 and the phase-locked loop 2582 through the transmission line 260 to achieve the phase compensation.

In the digital phase control unit 262, the phase compensation register 2622 is configured to send the required phase compensation value and information such as phase advance or phase lag and the like to the phase compensation control circuit 2621 through the transmission line 2623. The control to the phase locked by the phase-locked loop 2582 with the phase compensation control circuit 2621 varies the phase difference locked the phase-locked loop 2581 and the phase-locked loop 2582 (assuming that the phase locked by the phase-locked loop 2581 cannot be controlled). The signals outputted from the phase-locked loop 2581 and the phase-locked loop 2582 are separately transmitted into the differential signal synthesis circuit 2583 through a differential line +2584 and a differential line -2585 to be synthesized into a single-ended signal, and the single-ended signal is outputted to a back-end device (i.e., the signal demodulation device 266 in Fig. 2) through a transmission line 264 to be performed further processes.

As shown in Fig. 3, the whole flow of the phase compensating and receiving signal is: after a signal is received via an antenna, the received signal is filtered by a filter; the signal that out-of-band interferences are filtered is inputted into a balun to be transformed into differential signals; the differential signals are transmitted through differential lines to a low noise amplifier to be amplified; the amplified differential signals are separately passed through a phase discrimination unit to be discriminated phase, and the phase of either channel differential signal is compensated with a digital phase control unit; and finally the differential signals performed phase compensation are inputted into a signal demodulation device to be demodulated.

In the relating technologies, the phase-locked loop circuit has been digitalized. So, the digital control of the phase-locked loop circuit can be realized by software. The locked phase of the phase-locked loop is controlled directly through the register in the software. Furthermore, each cellular receiver has a phase-locked loop, and the phase-locked loop used in the patent can be the phase-locked loop which is already in the receiver devices, so that the costs of the phase discrimination unit and the digital phase control unit are save furthest.

The phase of the differential signals can be adjusted and optimized through register in the software and meanwhile the optimized phase information can be directly written into the software. The effect of the circuit *per se* to the phase of a signal is determined after the hardware of a product is determined finally. Therefore, the value of the phase compensating register can be written into the software after the hardware is debugged. When the software runs every time, the phase compensating value is executed without rewriting the value of the phase compensating register when the device is calibrated every time.

Furthermore, most of the communication systems cover some bandwidth. In the scope of the bandwidth, the absolute value of the phase difference of differential signals fluctuates, which may bring to the phase difference of signals within the bandwidth have a ripple. So in the differential reception system covering some bandwidth, the differential signals in high channel, middle channel and low channel can be compensated by adopting the method in the present disclosure in order to achieve the optimized compensating effect.

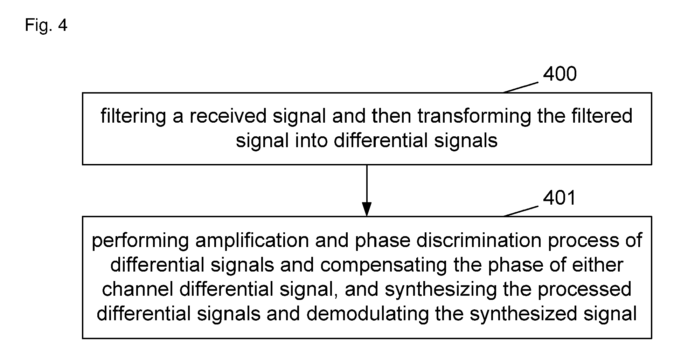

Fig. 4 is a flowchart of a method for receiving signals realized by a differential reception system in a cellular receiver in the disclosure. As shown in Fig. 4, the flow of the method comprises the following steps:
Step 400: filtering a received signal and then transforming the filtered signal into differential signals; and
Step 401: performing amplification and phase discrimination process of differential signals and compensating the phase of either channel differential signal, and synthesizing the processed differential signals and demodulating the synthesized signal.

In Step 401, the phase discrimination process comprises discriminating and locking the phase of the amplified differential signals. The compensation for the phase of either channel differential signal comprises adjusting the phase locked by the either channel phase discrimination unit according to the preset phase control information.

By means of controlling the phases of differential lines, the disclosure improves the receiving sensitivity of a differential reception system and significantly reduces the requirement for layout of the differential lines.

Specifically, through compensating the phase of differential lines with the phase compensation method in the disclosure, the phase-locked loop of the receiver in a mobile phone has a maximum phase error between -5 degree and 5 degree generally, and the worst situation is also between -10 degree and 10 degree. Therefore, if both the two paths of differential lines have a phase-locked loop, the maximum absolute value of phase shifting caused by the phase error is between 10 degree and 20 degree, and the corresponding receiving sensitivity of the receiver caused by the phase error decrease to between 0.015dB and 0.2dB. The more advantage is that: since the phase compensation can be adjusted arbitrarily via a register, the maximum attenuation caused by phase shifting for the receiver in the differential reception system of the disclosure only is the error caused by the phase noise of the phase-locked loop, i.e., between 0.015dB and 0.2dB.

Therefore, the differential reception system in the disclosure has the following advantages:
(1) The layout is easier.
   Since the phase error caused by differential lines can be adjusted by a phase-locked loop and register, the layout of the differential lines may be easier and the trace of the differential lines can be modified flexibly according to the requirement of layout so as to make the layout more flexible.
(2) The design of a mobile phone is more reliable.
   By analyzing, the uncertainty of the final sensitivity caused by the present layout of differential lines is very great, so it needs putting in a lot of effort in the layout. However, the specific phase error is unknown. When applying the differential reception system in the disclosure, the reasonable range of the receiving sensitivity is known at the beginning of the layout to thus improve the reliability of the design.
(3) The receiving sensitivity of a differential reception system is increased.
   When applying the differential reception system in the disclosure, the receiving sensitivity of the receiver caused by the phase error of the differential reception system decrease to between 0.015dB and 0.2dB, while the receiving sensitivity of the receiver caused by the phase shifting in the relating technologies decrease to 1.1dB. Therefore, the receiving sensitivity of the receiver is significantly improved (at lease 1dB).
(4) The cost of the whole differential reception system may not increase.
   Phase-locked loop is very common in a receiver, and adjusting the phase difference of the phase-locked loop circuit can be realized by only adjusting the register of the phase-locked loop. At the end of the adjustment, the adjusting value can be directly written into software, and both the phase-locked loop circuit and the register of the phase-locked loop do not generate additional cost.

## Claims

1. A cellular receiver comprising a differential reception system, the differential reception system comprising a filter (202), a balun (206), and a signal amplification, phase discrimination and demodulation module (250); wherein
the filter (202) is configured to filter a signal received by an antenna (200);
the balun (206) is configured to transform the filtered signal into differential signals; and
the signal amplification, phase discrimination and demodulation module (250) is configured to perform an amplification and phase discrimination process of the differential signals and compensate a phase of either channel differential signal, and synthesize the processed differential signals and demodulate the synthesized signal;
**characterized in that** the signal amplification, phase discrimination and demodulation module (250) comprises a low noise amplifier (252), a phase discrimination unit (258), a digital phase control unit (262) and a signal demodulation device (266); wherein
the low noise amplifier (252) is configured to amplify the differential signals and output the amplified differential signals;
the phase discrimination unit (258) is configured to discriminate and lock the phase of the amplified differential signals, and synthesize the processed differential signals;
the digital phase control unit (262) is configured to adjust the phase locked by phase discrimination unit (258) on either channel; and
the signal demodulation device (266) is configured to demodulate the synthesized signal;
wherein the phase discrimination unit (258) comprises two phase-locked loop circuits (2581, 2582) and a differential signal synthesis circuit (2583); wherein
the two phase-locked loop circuits (2581, 2582) are set on each differential line for discriminating and locking the phase of the amplified differential signal passed through the differential line; either channel of the two phase-locked loop circuits (2581, 2582) is controlled by the digital phase control unit (262); and
the differential signal synthesis circuit (2583) is configured to synthesize the differential signals outputted from the two channel phase-locked loop circuits (2581, 2582), and output the synthesized signal to the signal demodulation device (266).

2. The differential reception system of Claim 1, wherein the digital phase control unit (262) comprises a phase compensation control circuit (2621) and a phase compensation register (2622); wherein
the phase compensation register (2622) is configured to store phase control information; and
the phase compensation control circuit (2621) is configured to adjust the phase locked by the either channel phase discrimination unit (258) according to the phase control information acquired from the phase compensation register (2622).

3. A method for receiving signals realized by a differential reception system comprised in a cellular receiver, comprising:
filtering (400), by a filter, a received signal and then transforming, by a balun, the filtered signal into differential signals;
performing (401), by a signal amplification, phase discrimination and demodulation module, an amplification and phase discrimination process of differential signals and compensating a phase of either channel differential signal, and synthesizing the processed differential signals and then demodulating the synthesized signal;
**characterized in that** the step of performing (401), by a signal amplification, phase discrimination and demodulation module, an amplification and phase discrimination process of differential signals and compensating a phase of either channel differential signal, and synthesizing the processed differential signals and then demodulating the synthesized signal comprises:
amplifying, by a low noise amplifier, the differential signals and outputting the amplified differential signals;
discriminating and locking, by a phase discrimination unit, the phase of the amplified differential signals;
adjusting, by a digital phase control unit, either the locked phase of the differential signals;
synthesizing, by the phase discrimination unit, the processed differential signals; and
demodulating, by a signal demodulation device, the synthesized signal,
wherein the step of discriminating and locking, by a phase discrimination unit, the phase of the amplified differential signals specifically comprises:
discriminating and locking, by two phase-locked loop circuits in the phase discrimination unit set on each differential line, the phase of the amplified differential signal passed through said differential line; either channel of two phase-locked loop circuits is controlled by the digital phase control unit, and
wherein the step of synthesizing, by the phase discrimination unit, the processed differential signals specifically comprises:
synthesizing, by a differential signal synthesis circuit in the phase discrimination unit, the processed differential signals and outputting the synthesized signal to the signal demodulation device.

4. The method for receiving signals realized by the differential reception system of Claim 3, wherein the step of adjusting, by a digital phase control unit, either the locked phase of the differential signals comprises:
adjusting, by a phase compensation control circuit, the phase locked by the either channel phase discrimination unit according to preset phase control information acquired from a phase compensation register.

## Patentansprüche

1. Mobilfunkempfänger, umfassend ein differenzielles Empfangssystem, wobei das differenzielle Empfangssystem einen Filter (202), einen Balun (206) und ein Signalverstärkungs-, Phasendiskriminierungs- und Demodulationsmodul (250) umfasst; wobei
der Filter (202) konfiguriert ist, um ein von einer Antenne (200) empfangenes Signal zu filtern,
der Balun (206) konfiguriert ist, um das gefilterte Signal in Differenzialsignale umzuwandeln, und
das Signalverstärkungs-, Phasendiskriminierungs- und Demodulationsmodul (250) konfiguriert ist, um eine Verstärkungs- und Phasendiskriminierungsbehandlung der Differenzialsignale durchzuführen und um eine Phase jedes Kanaldifferenzialsignals zu kompensieren und um die behandelten Differenzialsignale zu synthetisieren und um das synthetisierte Signal zu demodulieren;
**dadurch gekennzeichnet, dass** das Signalverstärkungs-, Phasendiskriminierungs- und Demodulationsmodul (250) einen rauscharmen Verstärker (252), eine Phasendiskriminierungseinheit (258), eine digitale Phasensteuerungseinheit (262) und eine Signaldemodulationseinheit (266) umfasst; wobei
der rauscharme Verstärker (252) konfiguriert ist, um die Differenzialsignale zu verstärken und die verstärkten Differenzialsignale auszugeben,
die Phasendiskriminierungseinheit (258) konfiguriert ist, um die Phase der verstärkten Differenzialsignale zu diskriminieren und zu verriegeln und um die verarbeiteten Differenzialsignale zu synthetisieren,
die digitale Phasensteuerungseinheit (262) konfiguriert ist, um die von der Phasendiskriminierungseinheit (258) auf jedem Kanal verriegelte Phase einzustellen, und
die Signaldemodulationseinheit (266) konfiguriert ist, um das synthetisierte Signal zu demodulieren,
wobei die Phasendiskriminierungseinheit (258) zwei Phasenregelschleifenkreise (2581, 2582) und einen Differenzialsignalsynthesekreis (2583) umfasst, wobei
die zwei Phasenregelschleifenkreise (2581, 2582) auf jeder Differenzialleitung aktiviert sind, um die Phase des verstärkten Differenzialsignals, das durch die Differenzialleitung läuft, zu diskriminieren und zu verriegeln, wobei jeder Kanal der zwei Phasenregelschleifenkreise (2581, 2582) von der digitalen Phasensteuerungseinheit (262) gesteuert wird, und
der Differenzialsignalsynthesekreis (2583) konfiguriert ist, um die von den zwei Kanalphasenregelschleifenkreisen (2581, 2582) ausgegebenen Differenzialsignale zu synthetisieren und um das synthetisierte Signal an die Signaldemodulationseinheit (266) auszugeben.

2. Differenzielles Empfangssystem nach Anspruch 1, wobei die digitale Phasensteuerungseinheit (262) einen Phasenkompensationssteuerkreis (2621) und ein Phasenkompensationsregister (2622) umfasst, wobei
das Phasenkompensationsregister (2622) konfiguriert ist, um Phasensteuerungsinformationen zu speichern, und
der Phasenkompensationssteuerkreis (2621) konfiguriert ist, um die von jeder Kanalphasendiskriminierungseinheit (258) verriegelte Phase in Abhängigkeit von den vom Phasenkompensationsregister (2622) erhaltenen Phasensteuerungsinformationen einzustellen.

3. Signalempfangsverfahren, durchgeführt von einem in einem Mobilfunkempfänger integrierten differenziellen Empfangssystem, umfassend:
das Filtern (400) mittels eines Filters eines empfangenen Signals und darauffolgend das Umwandeln mittels eines Baluns des gefilterten Signals in Differenzialsignale,
das Durchführen (401) mittels eines Signalverstärkungs-, Phasendiskriminierungs- und Demodulationsmoduls einer Verstärkungs- und Phasendiskriminierungsbehandlung von Differenzialsignalen und das Kompensieren einer Phase jedes Kanaldifferenzialsignals, gefolgt von der Synthese der verarbeiteten Differenzialsignale und dem Demodulieren des synthetisierten Signals;
**dadurch gekennzeichnet, dass** der Schritt der Durchführung (401) mittels eines Signalverstärkungs-, Phasendiskriminierungs- und Demodulationsmoduls einer Phasenverstärkungs- und Diskriminierungsbehandlung von Differenzialsignalen und der Kompensation einer Phase des jedes Kanaldifferenzialsignals und des Synthetisierens der verarbeiteten Differenzialsignale, gefolgt vom Demodulieren des synthetisierten Signals, umfasst:
das Verstärken mittels eines rauscharmen Verstärkers der Differenzialsignale und die Ausgabe der verstärkten Differenzialsignale,
das Diskriminieren und das Verriegeln mittels einer Phasendiskriminierungseinheit der Phase der verstärkten Differenzialsignale,
das Einstellen mittels einer digitalen Phasensteuerungseinheit jeder verriegelten Phase der Differenzialsignale,
das Synthetisieren mittels der Phasendiskriminierungseinheit der verarbeiteten Differenzialsignale, und
das Demodulieren mittels einer Signaldemodulationseinheit des synthetisierten Signals,
wobei der Diskriminierungs- und Verriegelungsschritt mittels einer Phasendiskriminierungseinheit der Phase der verstärkten Differenzialsignale speziell umfasst:
das Diskriminieren und Verriegeln mit zwei auf jeder Differenzialleitung aktivierter Phasenregelschleifenkreise in der Phasendiskriminierungseinheit der Phase des verstärkten Differenzialsignals, das durch die Differenzialleitung läuft, wobei jeder Kanal der zwei Phasenregelschleifenkreise von der digitalen Phasensteuerungseinheit gesteuert wird, und
wobei der Syntheseschritt mittels der Phasendiskriminierungseinheit der verarbeiteten Differenzialsignale speziell umfasst:
das Synthetisieren mittels eines Differenzialsignalsynthesekreises in der Phasendiskriminierungseinheit der verarbeiteten Differenzialsignale und das Ausgeben des synthetisierten Signals an die Signaldemodulationseinheit.

4. Signalempfangsverfahren, durchgeführt von dem differenziellen Empfangssystem nach Anspruch 3, wobei der Einstellungsschritt mittels einer digitalen Phasensteuerungseinheit der verriegelten Phase der Differenzialsignale umfasst:
das Einstellen mittels eines Phasenkompensationssteuerkreises der mittels Kanalphasendiskriminierungseinheit in Übereinstimmung mit den vorbestimmten Phasensteuerungsinformationen aus einem Phasenkompensationsregister verriegelten Phase.

## Revendications

1. Récepteur cellulaire comprenant un système de réception différentielle, le système de réception différentielle comprenant un filtre (202), un symétriseur (206) et un module d'amplification de signal, de discrimination de phase et de démodulation (250) ; dans lequel
le filtre (202) est configuré pour filtrer un signal reçu par une antenne (200) ;
le symétriseur (206) est configuré pour transformer le signal filtré en signaux différentiels ; et
le module d'amplification de signal, de discrimination de phase et de démodulation (250) est configuré pour réaliser un traitement d'amplification et de discrimination de phase des signaux différentiels et compenser une phase du signal différentiel de chaque canal, et pour synthétiser les signaux différentiels traités et démoduler le signal synthétisé ;
**caractérisé en ce que** le module d'amplification de signal, de discrimination de phase et de démodulation (250) comprend un amplificateur à faible bruit (252), une unité de discrimination de phase (258), une unité de commande de phase numérique (262) et un dispositif de démodulation de signal (266) ; dans lequel
l'amplificateur à faible bruit (252) est configuré pour amplifier les signaux différentiels et délivrer en sortie les signaux différentiels amplifiés ;
l'unité de discrimination de phase (258) est configurée pour discriminer et verrouiller la phase des signaux différentiels amplifiés, et pour synthétiser les signaux différentiels traités ;
l'unité de commande de phase numérique (262) est configurée pour ajuster la phase verrouillée par l'unité de discrimination de phase (258) sur chaque canal ; et
le dispositif de démodulation de signal (266) est configuré pour démoduler le signal synthétisé ;
dans lequel l'unité de discrimination de phase (258) comprend deux circuits de boucle à verrouillage de phase (2581, 2582) et un circuit de synthèse de signaux différentiels (2583) ; dans lequel
les deux circuits de boucle à verrouillage de phase (2581, 2582) sont activés sur chaque ligne différentielle pour discriminer et verrouiller la phase du signal différentiel amplifié passant par la ligne différentielle ; chaque canal des deux circuits de boucle à verrouillage de phase (2581, 2582) est commandé par l'unité de commande de phase numérique (262) ; et
le circuit de synthèse de signaux différentiels (2583) est configuré pour synthétiser les signaux différentiels délivrés en sortie par les deux circuits de boucle à verrouillage de phase des canaux (2581, 2582), et pour délivrer en sortie le signal synthétisé vers le dispositif de démodulation de signal (266).

2. Système de réception différentielle selon la revendication 1, dans lequel l'unité de commande de phase numérique (262) comprend un circuit de commande de compensation de phase (2621) et un registre de compensation de phase (2622) ; dans lequel
le registre de compensation de phase (2622) est configuré pour stocker des informations de commande de phase ; et
le circuit de commande de compensation de phase (2621) est configuré pour ajuster la phase verrouillée par l'unité de discrimination de phase de chaque canal (258) en fonction des informations de commande de phase acquises auprès du registre de compensation de phase (2622).

3. Procédé de réception de signaux réalisé par un système de réception différentielle intégré dans un récepteur cellulaire, comprenant :
le filtrage (400), par un filtre, d'un signal reçu et ensuite la transformation, par un symétriseur, du signal filtré en signaux différentiels ;
la réalisation (401), par un module d'amplification de signal, de discrimination de phase et de démodulation, d'un traitement d'amplification et de discrimination de phase sur des signaux différentiels et la compensation d'une phase du signal différentiel de chaque canal, puis la synthèse des signaux différentiels traités et la démodulation du signal synthétisé ;
**caractérisé en ce que** l'étape de réalisation (401), par un module d'amplification de signal, de discrimination de phase et de démodulation, d'un traitement d'amplification et de discrimination de phase sur des signaux différentiels et de compensation d'une phase du signal différentiel de chaque canal, puis de synthèse des signaux différentiels traités et de démodulation du signal synthétisé comprend :
l'amplification, par un amplificateur à faible bruit, des signaux différentiels et la délivrance en sortie des signaux différentiels amplifiés ;
la discrimination et le verrouillage, par une unité de discrimination de phase, de la phase des signaux différentiels amplifiés ;
l'ajustement, par une unité de commande de phase numérique, de la phase verrouillée des signaux différentiels sur chaque canal ;
la synthèse, par l'unité de discrimination de phase, des signaux différentiels traités ; et
la démodulation, par un dispositif de démodulation de signal, du signal synthétisé,
dans lequel l'étape de discrimination et de verrouillage, par une unité de discrimination de phase, de la phase des signaux différentiels amplifiés comprend spécifiquement :
la discrimination et le verrouillage, par deux circuits de boucle à verrouillage de phase dans l'unité de discrimination de phase activés sur chaque ligne différentielle, de la phase du signal différentiel amplifié passant par ladite ligne différentielle ; chaque canal des deux circuits de boucle à verrouillage de phase est commandé par l'unité de commande de phase numérique, et
dans lequel l'étape de synthèse, par l'unité de discrimination de phase, des signaux différentiels traités comprend spécifiquement :
la synthèse, par un circuit de synthèse de signaux différentiels dans l'unité de discrimination de phase, des signaux différentiels traités et la délivrance en sortie du signal synthétisé vers le dispositif de démodulation de signal.

4. Procédé de réception de signaux réalisé par le système de réception différentielle selon la revendication 3, dans lequel l'étape d'ajustement, par une unité de commande de phase numérique, de la phase verrouillée des signaux différentiels sur chaque canal comprend :
l'ajustement, par un circuit de commande de compensation de phase, de la phase verrouillée par l'unité de discrimination de phase de chaque canal en fonction d'informations de commande de phase prédéfinies acquises auprès d'un registre de compensation de phase.
